# EUROPEAN PATENT APPLICATION

(11) **EP 3 666 545 A1**
(43) Date of publication of application: **17.06.2020**
(21) Application number: 18844113.3
(22) Date of filing: 26.06.2018
(51) Int. Cl.: B60C 5/00, B60C 5/14, B60C 17/00

(54) **TIRE**

(30) Priority: 09.08.2017 JP 2017154379
(71) Applicant: Bridgestone Corporation, Tokyo 104-8340 (JP)
(72) Inventor: SHIBATA, Masanao, Tokyo 104-8340 (JP); WATANABE, Jun, Tokyo 104-8340 (JP); SUKEGAWA, Shin, Tokyo 104-8340 (JP); OHARA, Takayuki, Tokyo 104-8340 (JP); YAMAGUCHI, Suguru, Tokyo 104-8340 (JP); HORI, Hiroki, Tokyo 104-8340 (JP); MITSUDA, Sho, Tokyo 104-8340 (JP)
(74) Representative: Oxley, Robin John George
(86) International application number: PCT/JP2018/024233
(87) International publication number: WO 2019/031088

(57) **Abstract**

A tire which includes a carcass which extends from a pair of bead portions through a sidewall portion to reach a tread portion and an inner liner disposed at an inner circumferential surface of a tire main body is provided. The tire further includes a sound control layer which covers at least a part of an inner circumferential surface of the tire. The inner liner includes an end in a tire width direction annularly extending in a tire circumferential direction on the inner circumferential surface of the tire main body. The sound control layer is fixed on the end in a tire width direction to cover at least a part of a periphery of the end in a tire width direction of the inner liner.

## Description

### TECHNICAL FIELD

The present disclosure relates to a tire.

### BACKGROUND

Conventionally, forming an inner circumferential surface of a tire has been executed by covering the inner circumferential surface of a tire main body (a portion of the tire excluding an inner liner) with the inner liner made of a rubber material having excellent air impermeability (for example, see Patent Literature 1.)

Also, providing no inner liner has been executed to a region which acquires air impermeability by another configuration such as a side reinforcing rubber layer for securing the air impermeability, for example. In such a tire, for example, an end in a tire width direction of the inner liner is exposed on the inner circumferential surface of the tire main body at an outer side in a tire radial direction than a bead portion (for example, Patent Literature 2.)

### CITATION LIST

### Patent Literature

PTL 1: Japanese Patent Laid-Open No. 2017-56868
PTL 2: Japanese Patent Laid-Open No. 2014-37214

### SUMMARY

### (Technical Problem)

In the inner liner, in order to apply air impermeability, a rubber material which is different from that in a laminated portion of the inner liner is normally used. Accordingly, depending on use environment of a tire and the like, there is a case that the end in the tire width direction of the inner liner is easily peeled off from the inner circumferential surface of the tire main body.

Also, it is known that, generally, when a tread portion collides with irregularities of a road surface during running of a vehicle, cavity resonance of air contained in an inner cavity of a tire occurs and a noise of frequency band of 180 to 300 kHz is generated. Consequently, reduction of such cavity resonance noise has been desired.

In view of this, an object of the present disclosure is to provide a tire which inhibits peel-off of an inner liner at an end in the tire width direction to improve durability of the tire as well as reduces a cavity resonance noise.

### (Solution to Problem)

According to the present disclosure, there is provided a tire including a carcass which extends from a pair of bead portions through a sidewall portion to reach a tread portion and an inner liner disposed at an inner circumferential surface of a tire main body, wherein the tire further includes a sound control layer which covers at least a part of an inner circumferential surface of the tire, the inner liner includes an end in a tire width direction annularly extending in a tire circumferential direction on the inner circumferential surface of the tire main body, and the sound control layer is fixed on the end in a tire width direction to cover at least a part of a periphery of the end in a tire width direction of the inner liner.

Additionally, in the present specification, a portion of a tire excluding an inner liner is called as "a tire main body," and an inner circumferential surface of the tire excluding the inner liner is called as "an inner circumferential surface of a tire main body." Also, an inner circumferential surface of the tire including the inner liner is called as "an inner circumferential surface of a tire."

Additionally, in the present specification, "a maximum width position of a tire" refers to a tire radial position having a maximum width of a tire, and "a maximum width of a tire" refers to a maximum width measured excluding characters and white lines provided at a sidewall portion or a side cut protector and a rim guard in a standard state which will be described later.

Hereinafter, in the present specification, a state that a tire is assembled to a rim and filled with a predetermined internal pressure to achieve no load is called as "a standard state."

Additionally, the "rim" is an industrial standard which is effective for a region in which a tire is produced and used, and refers to an approved rim in an application size (this refers to a measuring rim in STANDARDS MANUAL of ETRTO and a design rim in YEAR BOOK of TRA) described currently or in the future in JATMA YEAR BOOK of JATMA (the Japan Automobile Tyre Manufacturers Association) in Japan, STANDARDS MANUAL of ETRTO (The European Tyre and Rim Technical Organisation) in Europe, and YEAR BOOK of TRA (The Tire and Rim Association, Inc.) in the United States etc. (In other words, the "rim" described above includes, in addition to the current size, a size which can be included in the industrial standard in the future. As an example of "size described...in the future," a size described as "FUTURE DEVELOPMENTS" in STANDARDS MANUAL 2013 Edition of ETRTO can be listed.) However, in a case of a size not described in the industrial standard, a rim with a width corresponding to a bead width of the tire can be adopted.

Also, "a predetermined internal pressure" refers to air pressure (maximum air pressure) corresponding to maximum load capability of a single wheel in applicable size and ply rating described in the above-described JATMA YEAR BOOK, and in a case of a size not described in the industrial standard, air pressure (maximum air pressure) corresponding to maximum load capability defined for each vehicle to which a tire is installed can be adopted. Further, in the present specification, "a maximum load" refers to a load corresponding to the maximum load capability. Additionally, an air described herein can be replaced with inert gas such as nitrogen gas and others.

Additionally, "the tread ground contact edge" which will be described later in the present specification refers to both ends in the tire width direction of a tread surface (an outer circumferential surface over the entire circumference of the tire which contacts to a road surface when a tire assembled to a rim and filled with a predetermined internal pressure is rolled in a state that the maximum load is applied), and "a tread ground contact width" refers to a tire widthwise distance between both tread ground contact edges in the standard state.

### (Advantageous Effect)

According to the present disclosure, a tire which inhibits peel-off of an inner liner at an end in the tire width direction to improve durability of the tire as well as reduces a cavity resonance noise can be provided.

### BRIEF DESCRIPTION OF THE DRAWINGS

In the accompanying drawings:
FIG. 1 is partial cross-sectional view illustrating cross section in tire width direction of half portion of tire according to embodiment of the present disclosure;
FIG. 2A is schematic developed view which schematically illustrates the state that inner liner and sound control layer in tire illustrated in FIG. 1 are subjected to planar development;
FIG. 2B is modification of FIG. 2A;
FIG. 2C is modification of FIG. 2A; and
FIG. 3 is main part sectional view illustrating cross section in the tire width direction of main portion of tire according to another embodiment of the present disclosure.

### DETAILED DESCRIPTION

Hereinafter, embodiments of a tire according to the present disclosure is exemplified with reference to the drawings.

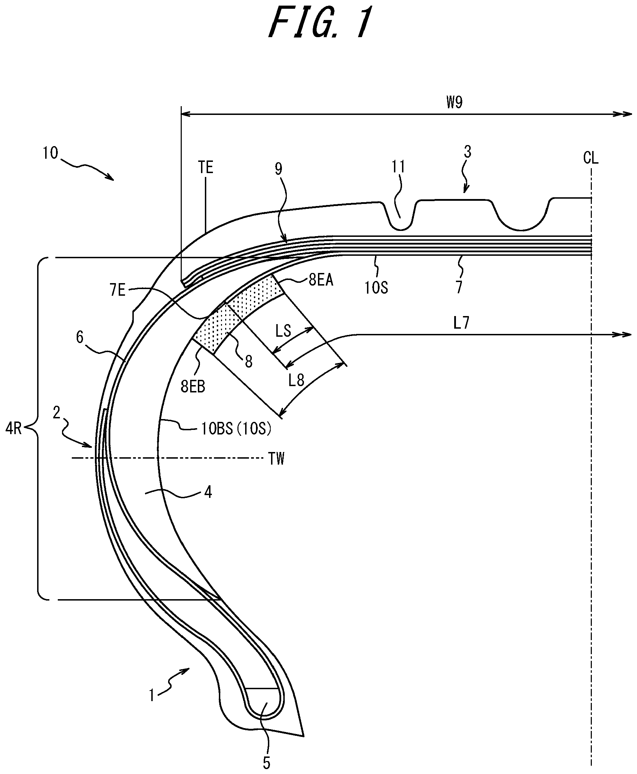

FIG. 1 is a partial cross-sectional view illustrating a cross section in a tire width direction of a half portion of a tire 10 according to an embodiment of the present disclosure. Additionally, in this embodiment, a half portion of the tire 10 which is not illustrated has the same configuration as that of the half portion of the tire 10 which is illustrated.

The tire 10 according to this embodiment includes a pair of bead portions 1, a pair of sidewall portions 2 arranged outside in a tire radial direction of the bead portions 1 and a tread portion 3 arranged between the sidewall portions 2, and in this embodiment, to each of the sidewall portions 2, a reinforcing rubber layer 4 with a crescent-shaped cross section is provided. More specifically, the tire 10 includes a carcass 6 which straddles bead cores 5 respectively provided to each of the pair of bead portion 1 in a toroidal shape and an inner liner 7 arranged at an inner circumferential side of the carcass 6, and at least a part of the reinforcing rubber layer 4 is arranged between the carcass 6 and the inner liner 7.

In other words, the tire 10 includes the carcass 6 which extends from the pair of bead portions 1 passing through the sidewall portion 2 to reach the tread portion 3 and the inner liner 7 disposed at an inner circumferential surface 10BS of a tire main body, and the inner liner 7 in this embodiment extends about a tire equator surface CL from the tire equator surface CL over at least a part of the sidewall portion 2 at both outer sides in the tire width direction, and terminates in an extended region 4R in a tire radial direction of the reinforcing rubber layer 4. In this way, the inner liner 7 has an end in a tire width direction 7E annularly extending in a tire circumferential direction on the inner circumferential surface 10BS of the tire main body.

Also, the tire 10 according to the embodiment incudes a sound control layer 8 made of a sponge material in this embodiment to cover at least a part of an inner circumferential surface 10S of the tire. As illustrated, the sound control layer 8 in this embodiment has a rectangular cross section slightly curved along the inner circumferential surface 10S of the tire.

The sound control layer 8 in this embodiment is fixed on the end in a tire width direction 7E to cover at least a part of a periphery of the end in a tire width direction 7E of the inner liner 7 annularly extending in the tire circumferential direction.

More specifically, in the sound control layer 8, a portion of the sound control layer 8 (in this embodiment, an outer half portion in the tire radial direction of the sound control layer 8 in a cross-sectional view in the tire width direction in the standard state) is laminated and fixed on an end portion in the tire width direction of the inner liner 7 including the end in a tire width direction 7E of the inner liner 7, while the remained portion of the sound control layer 8 (in this embodiment, an inner half portion in the tire radial direction of the sound control layer 8) is laminated and fixed on the reinforcing rubber layer 4 at an outer region in the tire width direction than the end in a tire width direction 7E of the inner liner 7.

In other words, in the sound control layer 8 in this embodiment, an outer end in a tire radial direction 8EA which is one end of the sound control layer 8 is disposed on the inner liner 7, while an inner end in a tire radial direction 8EB which is the other end of the sound control layer 8 is not disposed on the inner liner 7, and in this embodiment, is disposed on the reinforcing rubber layer 4 at an inner side in the tire radial direction than the end in a tire width direction 7E of the inner liner 7. In this way, the sound control layer 8 is fixed on the end in a tire width direction 7E to cover at least a part of the periphery of the end in a tire width direction 7E of the inner liner 7.

In this way, the sound control layer 8 in this embodiment is fixed on the end in a tire width direction 7E to independently cover each end in a tire width direction 7E of the inner liner 7 positioned at one side and the other side in the tire width direction about a tire equator surface. In other words, the sound control layer 8 does not extendedly exist on the tire equator surface CL, but is dividedly disposed at both sides in the tire width direction about the tire equator surface CL.

Here, in the tire 10 according to this embodiment, the sound control layer 8 which covers at least a part of the inner circumferential surface 10S of the tire is included, the inner liner 7 has the end in a tire width direction 7E annularly extending in the tire circumferential direction on the inner circumferential surface 10BS of the tire main body and the sound control layer 8 is fixed on the end in a tire width direction 7E to cover at least a part of the periphery of the end in a tire width direction 7E of the inner liner 7.

In this way, in the tire 10 according to this embodiment, fixation to the tire main body at the end in a tire width direction 7E of the inner liner 7 is assisted and reinforced by the sound control layer 8, so that peel-off of the inner liner 7 at the end in a tire width direction 7E can be inhibited.

In other words, as described above, in the inner liner, in order to apply air impermeability, the rubber material which is different from that in the laminated portion of the inner liner is normally used. Accordingly, there is a case that the end in the tire width direction of the inner liner is easily peeled off from the inner circumferential surface of the tire main body. However, in the tire 10 according to the present disclosure, since the end in a tire width direction 7E of the inner liner 7 is sandwiched by the inner circumferential surface 10BS of the tire main body and the sound control layer 8 to be fixed, peel-off of the inner liner 7 starting from the end in a tire width direction 7E can be inhibited. This improves durability of the tire.

Also, in the tire 10 according to this embodiment, fixation of the inner liner 7 at the end in a tire width direction 7E is assisted and reinforced using the sound control layer 8 which provides an effect in reduction of cavity resonance, so that a cavity resonance noise can be reduced by the sound control layer 8.

Additionally, fixation of the inner liner 7 to the inner circumferential surface 10BS of the tire main body and fixation of the sound control layer 8 to the inner circumferential surface 10S of the tire can respectively executed by adhesion by adhesive or fixation by thermal fusion bonding etc.

Additionally, the sound control layer 8 according to this embodiment is constituted by a sponge material. The sponge material is a cotton-like porous structure, and for example, includes a so-called sponge having an interconnected cell in which a rubber and synthetic resin are foamed. Also, the sponge material includes a web-like sponge in which animal fiber, plant fiber or synthetic fiber etc. are tangled to be integrally connected other than the above-described sponges. Additionally, the above-described "porous structure" means also including a structure having closed pore not limited to a structure having an interconnected cell.

The above-described sponge material converts vibration energy of air due to vibration of gaps formed on a surface or an inner portion to thermal energy. Due to this, cavity resonance in the inner cavity of the tire is inhibited, and as a result, a road noise can be reduced. Moreover, the sponge material is easy to be deformed such as contraction and flection. Consequently, even when the sound control layer 8 made of the sponge material is laminated on the inner circumferential surface of a tread, no substantial influence is provided to deformation of the tire during running of the vehicle. In other words, also as a configuration of laminating the sound control layer 8 on the inner circumference of the tread, little adverse effect is provided to steering stability etc.

As a material for the sponge, for example, synthetic resin sponges such as an ether polyurethane sponge, an ester polyurethane sponge and a polyethylene sponge, and rubber sponges such as a chloroprene rubber sponge (CR sponge), an ethylene propylene rubber sponge (EPDM sponge) and a nitrile rubber sponge (NBR sponge) can be listed. Considering viewpoints such as sound control, lightness, foam adjustability and durability, a polyurethane or polyethylene sponge etc. including the ether polyurethane sponge is preferably used.

Additionally, the material constituting the sound control layer 8 is not limited to the above-described sponges, and any material may be used as long as it can execute control such that a cavity resonance energy is lowered due to mitigation and absorption of the cavity resonance energy and conversion to another energy (for example, thermal energy) etc.

Also, a specific gravity of the sponge material is preferably 0.005 to 0.06, more preferably 0.01 to 0.04, and especially preferably, 0.01 to 0.03 considering a balance between increase of a weight of the tire and an effect of inhibiting cavity resonance.

Further, a volume of the sound control layer 8 is preferably 0.4% to 20% of the entire volume of the inner cavity of the tire. By securing 0.4% or more of the volume of the sound control layer 8 to the entire volume of the inner cavity of the tire, a reduction effect of a desired amount (for example, 2 dB or more) of cavity resonance energy is easily achieved. The sound control layer 8 is preferably 1% or more of the entire volume of the inner cavity of the tire, more preferably 2% or more, and especially preferably, 4% or more.

On the other hand, improvement of the reduction effect of the cavity resonance energy cannot be expected even with a configuration that the volume of the sound control layer 8 exceeds 20% of the entire volume of the inner cavity of the tire. Rather, there is a possibility of deteriorating a weight balance of a tire assembly in which the tire is assembled to a rim. From such viewpoint, the volume of the sound control layer 8 is preferably 16% or less of the entire volume of the inner cavity of the tire, and 10% or less is especially preferable. Additionally, this volume ratio is irrelevant to the number of sound control layers 8. In other words, in a case where there is a plurality of sound control layers 8, the same effect can be obtained as long as the sum of the volumes of all of the plurality of sound control layers 8 satisfies the above relationship of the volume ratio.

Also, from a viewpoint of inhibiting peel-off of the inner liner 7 at the end in a tire width direction 7E more reliably to further reduce the cavity resonance noise, the sound control layer 8 according to this embodiment is preferably fixed on the end in a tire width direction 7E over 75% or more in the tire circumferential direction of a circumferential length of the end in a tire width direction 7E of the inner liner 7.

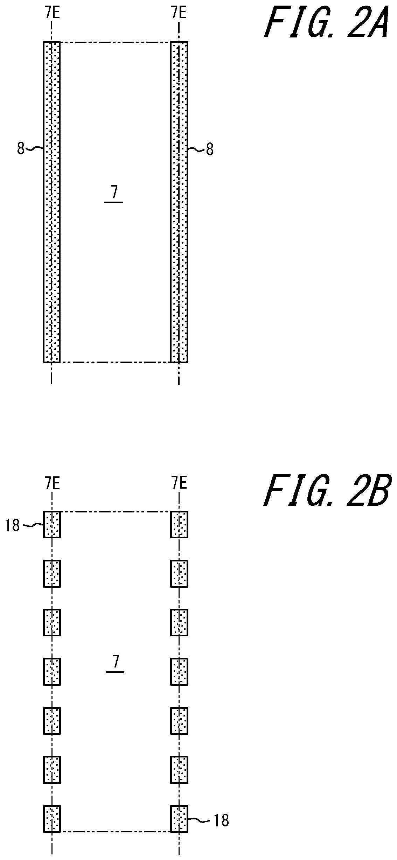

Also, from a similar viewpoint, as illustrated in FIG. 2A, the sound control layer 8 according to this embodiment is preferably fixed on the end in a tire width direction 7E to cover the entire circumference of the end in a tire width direction 7E of the inner liner 7.

Additionally, the sound control layer according to the present disclosure is not limited to an arrangement illustrated in FIG. 2A, and as in a sound control layer 18 illustrated in FIG. 2B for example, the sound control layer may be arranged to intermittently cover the end in a tire width direction 7E of the inner liner 7 in the tire circumferential direction. In such a case, a risk of weight increase and reduction of thermal dissipation of the tire by the sound control layer 8 can be suppressed.

Additionally, in an example of FIG. 2B, positions of the sound control layer 18 in the tire circumferential direction at one end in a tire width direction 7E and at the other end in the tire width direction 7E of an inner liner 27 are the same. However, the positions in the tire circumferential direction may be different.

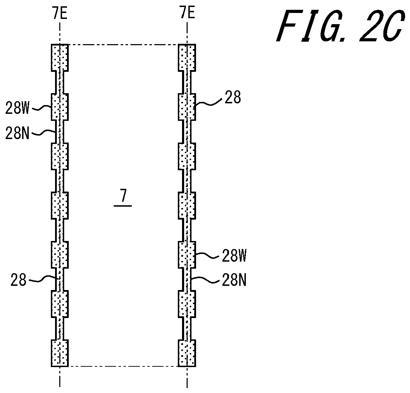

Also, as illustrated in FIG. 2C, the sound control layer according to the present disclosure may extend such that the length of a sound control layer 28 in the tire width direction may vary in the tire circumferential direction. In the illustrated example, in the sound control layer 28, a narrow width portion 28N having a relatively narrow width in the tire width direction and a wide width portion 28W having a relatively wide width in the tire width direction are alternately arranged in the tire circumferential direction. In such a case, the fixation strength, the amount of reduction of the cavity resonance noise, the amount of increase of weight and thermal dissipation etc. by the sound control layer 8 can be appropriately adjusted in accordance with a desired property.

Moreover, in the sound control layer 8 in this embodiment, in the cross-sectional view in the tire width direction in the standard state, a periphery width L8 (A width measured along an extending direction. The same is applied hereinafter.) of the sound control layer 8 is preferably 15% or more and 70% or less of a periphery width L7 of the inner liner 7.

If the periphery width L8 is 15% or more, a retention force (fixation property) of the sound control layer 8 to the end in a tire width direction 7E of the inner liner 7 is improved. Consequently, peel-off at the end in a tire width direction 7E can be inhibited more reliably, and the cavity resonance noise can be reduced more reliably.

If the periphery width L8 is 70% or less, weight increase of the tire can be inhibited, and from a viewpoint of inhibiting excessive temperature increase of the tire, durability of the tire can be improved.

Also, from a viewpoint of inhibiting peel-off at the end in a tire width direction 7E of the inner liner 7 more reliably, in the sound control layer 8 in this embodiment, in the cross-sectional view in the tire width direction in the standard state, an overlapped periphery width LS of the inner liner 7 and the sound control layer 8 is preferably 25% or more and 75% or less of the periphery width L8 of the sound control layer 8.

If the overlapped periphery width LS is within this range, the retention force (fixation property) of the sound control layer 8 to the end in a tire width direction 7E of the inner liner 7 is secured more reliably. Consequently, peel-off at the end in a tire width direction 7E can be inhibited more reliably.

Additionally, the tire 10 in this embodiment has the reinforcing rubber layer 4 at the sidewall portion 2. However, the tire of the present disclosure does not necessarily include the reinforcing rubber layer 4.

Additionally, in a case where the reinforcing rubber layer 4 is included in the sidewall portion 2 as in the tire 10 according to this embodiment, the end in a tire width direction 7E of the inner liner 7 is preferably positioned in the extended region 4R in a tire radial direction of the reinforcing rubber layer 4.

The inner liner is commonly arranged from at least one bead portion (especially, a bead toe) to the other bead portion (especially, a bead toe) since it sufficiently secures air impermeability. However, in a case where the reinforcing rubber layer 4 is provided to the sidewall portion 2, required air impermeability can be sufficiently secured by the reinforcing rubber layer 4.

Moreover, by reducing an arrangement region of the inner liner generally made with use of a rubber having a higher heat buildup (tan delta is large) compared with other portions of the tire as described above, an amount of heat buildup of the inner liner is reduced while air impermeability is secured, so that rolling resistance of the tire can be reduced.

Also, in a case where the above-described reinforcing rubber layer 4 is included in the sidewall portion 2, as in the embodiment illustrated in FIG. 1, the end in a tire width direction 7E of the inner liner 7 is preferably positioned at an outer side in the tire radial direction than a maximum width position TW of the tire.

With this configuration, the arrangement region of the inner liner 7 can be further reduced, so that the rolling resistance of the tire can be further reduced.

Further, in the tire in which the reinforcing rubber layer 4 is included in the sidewall portion 2, generally, compared to the tire which does not include the reinforcing rubber layer 4, a volume of rubber of the sidewall portion 2 is large and a temperature of the tire during running of the vehicle easily increases.

Accordingly, when the end in a tire width direction 7E of the inner liner 7 is disposed at an outer side in the tire radial direction than the maximum width position TW of the tire and at least a part of the reinforcing rubber layer 4 is disposed toward the inner cavity of the tire (in this embodiment, exposing to the inner circumferential surface 10S of the tire) not through the inner liner 7, heat generated in the reinforcing rubber layer 4 is easily dissipated to the inner cavity of the tire, so that excess temperature increase of the tire is inhibited and durability of the tire can also be improved.

Also, the tire 10 according to the present embodiment includes a belt 9 constituted by at least one belt layer at an outer circumferential side of the carcass 6 at the tread portion 3. In this embodiment, the belt 9 is constituted by at least one layer of (two layers in this embodiment) inclined belt layer which covers by rubber a plurality of cords extending inclined to the tire circumferential direction and at least one layer of (one layer in this embodiment) circumferential belt layer which is arranged outside in the tire radial direction of the inclined belt layer and covers by rubber a plurality of cords extending along the tire circumferential direction. In this embodiment, the belt 9 extends from the tire equator surface CL to both sides in the tire width direction, and terminates at an outer side in the tire width direction than a tread ground contact edge TE.

Here, in a case where the reinforcing rubber layer 4 is included in the sidewall portion 2, in the cross-sectional view in the tire width direction in the standard state, the periphery width L7 of the inner liner 7 is preferably a width in a tire width direction W9 of a belt (a width measured along the tire width direction) or more as well as a width added 20 mm to the width in a tire width direction W9 of the belt 9 or less (W9≤L7≤W9+20 mm.)

If W9≤L7, internal pressure retention of the tire 10 and durability of the belt 9 can be preferably maintained. Also, if L7≤W9+20 mm, by reducing the arrangement region of the inner liner 7, the amount of heat buildup in the inner liner 7 is reduced, and thus the rolling resistance of the tire can be further reduced.

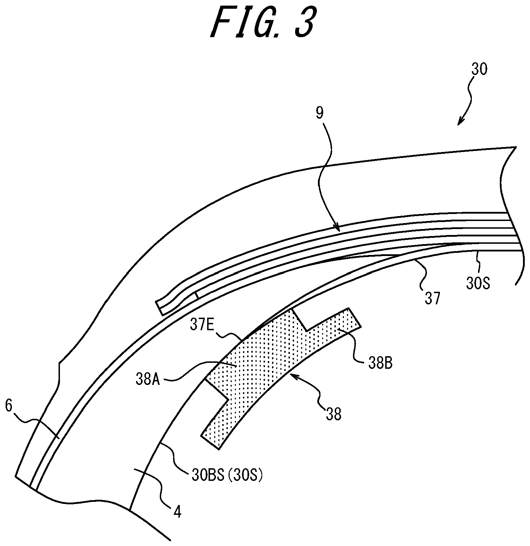

Also, FIG. 3 is a partial sectional view illustrating a cross section in the tire width direction of a half portion of a tire 30 according to another embodiment of the present disclosure.

The tire 30 has the same configuration as in the tire 10 according to the previous embodiment excluding a cross-sectional shape in the tire width direction of a sound control layer 38 and the shape of an end in a tire width direction 37E of an inner liner 37.

In other words, the sound control layer 38 is constituted by a base portion 38A which is disposed on an inner circumferential surface 30S of the tire in a cross-sectional view in the tire width direction in the standard state and in which a periphery width along the inner circumferential surface 30S of the tire is relatively small and a main body portion 38B which is provided on the base portion 38A and in which the periphery width is relatively larger than in the base portion 38A. In the sound control layer 38, the base portion 38A is fixed on the end in a tire width direction 37E to cover at least a part of the end in a tire width direction 37E of the inner liner 37 annularly extending in the tire circumferential direction, and the main body portion 38B is not fixed on the inner circumferential surface 30S of the tire, and at least a part (in this example, both end portions in FIG. 3) of the main body portion 38B covers the inner circumferential surface 30S of the tire having an interval with the inner circumferential surface 30S of the tire.

With this configuration, fixation to an inner circumferential surface 30BS of the tire main body at the end in a tire width direction 37E of the inner liner 37 is assisted and reinforced by the base portion 38A, so that peel-off of the inner liner 37 at the end in a tire width direction 37E can be inhibited.

Further, when sufficient fixation can be secured at the base portion 38A and the main body portion 38B is provided on the base portion 38, a volume and a surface area of the sound control layer 38 are made larger, so that the cavity resonance noise can be further reduced.

Also, in the inner liner 37 in this embodiment, at an end in the tire width direction of the inner liner 37, the thickness of the inner liner 37 (the length in a normal line direction at the inner circumferential surface of the tire) tapers toward the end in a tire width direction 37E. In this case, compared to a case where the thickness of the inner liner is constant over the tire width direction, the end in a tire width direction 37E is more difficult to be peeled off.

Additionally, while the cross-sectional shape of the sound control layer in the present disclosure is not limited to the examples, for example, any shape such as a triangle, a trapezoid, a circle, an oval figure or a combination thereof may be adopted.

Also, when a surface at the inner circumferential side of the sound control layer is wave-shaped, zigzag-shaped, or step-like irregular-shaped or irregular-shaped having a plurality of protrusions for example, the surface area of the sound control layer increases, whereby the cavity resonance noise can be reduced more effectively.

While the carcass 6 made of one layer of carcass ply is used in the tires 10, 30 according to this embodiment described before, in the tire according to the present disclosure, a carcass made of two layers, three layers or more of carcass ply may be used.

Also, in the present disclosure, the configuration of the belt 9 is not limited to the configuration described before, and two layers, three layers or more of the circumferential belt layer or one layer, three layers or more of the inclined belt layer may be adopted.

Also, two circumferential grooves 11 are provided at the tread portion 3 in the half portion of the tire 10 illustrated in FIG. 1. However, not limited to this form, the tire according the present disclosure may include one, three or more circumferential grooves at the half portion of the tire, or no circumferential groove may be provided. Further, in accordance with a desired property, any groove etc. such as a width direction groove or sipe may be provided.

Also, in the tires 10, 30 according to this embodiment described before, the half portion of the tire which is not illustrated also has the same configuration of the half portion of the tire which is illustrated. However, in the present disclosure, the previously-stated effect can be obtained as long as one half portion of the tire has the configuration illustrated in FIGS. 1 to 3.

### EXAMPLES

Hereinafter, examples of the present disclosure are explained. However, the present disclosure is not at all limited to the following examples.

A tire of an example and a tire of a comparative example (both tires have the tire size of 205/55R16) were produced experimentally under the specification illustrated in Table 1, and difficulty of peel-off of an inner liner and a reduction effect of a cavity resonance noise were evaluated.

A tire in an example 1 is a tire illustrated in FIG. 1 having the reinforcing rubber layer 4 at the sidewall portion 2, in which the sound control layer 8 is provided to cover at least a part of the inner circumferential surface 10S of the tire, the inner liner 7 has the end in a tire width direction 7E annularly extending in the tire circumferential direction on the inner circumferential surface 10BS of the tire main body, the sound control layer 8 is fixed on the end in a tire width direction 7E to cover the entire circumference of the end in a tire width direction 7E of the inner liner 7. Additionally, in the tire in an example 1, the periphery width of the sound control layer 8 which covers one end and the other end of the inner liner 7 are respectively 50 mm.

A tire in a comparative example 1 is the same tire as the tire in an example 1 excluding that the former does not include the sound control layer at the inner circumferential surface of the tire.

A tire in a comparative example 2 is the same tire as the tire in an example 1 excluding that, in the former, the sound control layer is disposed at a crown portion (a region of about 50% of the tread ground contact width about the tire equator CL) of the tread and is not fixed on the end in a tire width direction to cover the end in a tire width direction of the inner liner.

A tire in an example 2 is the same tire as the tire in an example 1 excluding that, in the former, the sound control layer 8 is continuously disposed in the tire width direction from one end in a tire width direction 7E to other end in a tire width direction 7E of the inner liner 7.

### [Difficulty in peel-off of end of inner liner]

A maximum applied load corresponding to LI (Load Index) was applied in a drum tester and running at 60 km/h was executed, and at the time of running of 10000 km, a state of the inner liner was visually confirmed and existence of peel-off at a cross-section in a width direction was confirmed.

The result is presented in Table 1. "Existence" is presented when the inner liner is peeled off, while "Non-Existence" is presented when no peel-off is confirmed.

### [Reduction effect of cavity resonance noise]

Each sample tire was attached to a rim (16 x 6.5J), filled with 250 kPa (corresponding pressure) of internal pressure, attached to a drum tester including an iron drum with a diameter of 1.7 m having an iron plate surface and rolled at a constant rate under the condition of a load mass of the tire of 5.0 kN and a speed of 60 km/h. At that time, from a frequency spectrum obtained by measuring a tire axial force (Fz) in the up-down direction using a wheel force sensor, a peak value of frequency corresponding to the cavity resonance noise was measured, thereby measuring the cavity resonance noise of each sample tire.

The results are illustrated in Table 1. The amount of reduction from the peak value of the cavity resonance noise generated at the tire in a comparative example 1 is illustrated as the amount of reduction (dB) of the cavity resonance noise. The larger numerical value represents that the amount of reduction of the cavity resonance noise is larger.

**[Table 1]**

| | Periphery width of a sound control layer (mm) | Existence or Non-existence of a sound control layer on an end in a tire width direction of an inner liner | Existence or Non-existence of a sound control layer on a tire equator surface | Existence or Non-existence of peel-off | The amount of reduction of cavity resonance noise (dB) |
|---|---|---|---|---|---|
| Tire in an example 1 | 100 | Existence | Non-existence | Non-existence | 1.2 |
| Tire in a comparative example 1 | - | - | - | Existence | 0 |
| Tire in a comparative example 2 | 100 | Non-existence | Existence | Existence | 1.2 |
| Tire in an example 2 | 200 | Existence | Existence | Non-existence | 1.8 |

It is found that, in the tires in an example, compared to the tires in a comparative example, peel-off of the inner liner at the end in the tire width direction is inhibited to improve durability of the tire, and the cavity resonance noise is reduced.

### REFERENCE SIGNS LIST

1 Bead portion
2 Sidewall portion
3 Tread portion
4 Reinforcing rubber layer
4R Extended region in a tire radial direction of a reinforcing rubber layer
5 Bead core
6 Carcass
7, 37 Inner liner
7E, 37E End in a tire width direction of an inner liner
L7 Periphery width of the inner liner
8, 18, 28, 38 Sound control layer
8EA Outer end in a tire radial direction in a sound control layer
8EB Inner end in the tire radial direction in the sound control layer
L8 Periphery width of the sound control layer
28N Narrow width portion
28W Wide width portion
38A Base portion
38B Main body portion
9 Belt
W9 Width in a tire width direction of a belt
10, 30 Tire
10S, 30S Inner circumferential surface of a tire
10BS, 30BS Inner circumferential surface of a tire main body
11 Circumferential groove
CL Tire equator surface
LS Overlapped periphery width
TE Tread ground contact edge
TW Tire maximum width position

## Claims

1. A tire comprising a carcass which extends from a pair of bead portions through a sidewall portion to reach a tread portion and an inner liner disposed at an inner circumferential surface of a tire main body,
wherein the tire further comprises a sound control layer which covers at least a part of an inner circumferential surface of the tire,
the inner liner includes an end in a tire width direction annularly extending in a tire circumferential direction on the inner circumferential surface of the tire main body, and
the sound control layer is fixed on the end in a tire width direction to cover at least a part of a periphery of the end in a tire width direction of the inner liner.

2. The tire according to claim 1, wherein the sound control layer is fixed on the end in a tire width direction to cover an entire circumference of the end in a tire width direction of the inner liner.

3. The tire according to claim 1 or 2, wherein the sidewall portion includes a reinforcing rubber layer,
the end in a tire width direction of the inner liner is positioned in an extended region in a tire radial direction of the reinforcing rubber layer.

4. The tire according to claim 3, wherein the end in a tire width direction of the inner liner is positioned at an outer side in the tire radial direction than a maximum width position of the tire.
